# EUROPÄISCHE PATENTANMELDUNG

(11) **EP 2 382 940 A2**
(43) Veröffentlichungstag der Anmeldung: **02.11.2011**
(21) Anmeldenummer: 11163819.3
(22) Anmeldetag: 27.04.2011
(51) Int. Cl.: A61C 1/18, A61C 1/00, H02K 5/00, H02K 5/16, H02K 5/167, H02K 5/173, C23C 8/00

(54) **Elektromotoranordnung für ein medizinisches, insbesondere ein dentales Handstück, sowie Dentalinstrumententeil**

(30) Priorität: 27.04.2010 DE 102010028245
(71) Anmelder: Kaltenbach & Voigt GmbH, 88400 Biberach (DE)
(72) Erfinder: Düsing, Josef, 88299, Leutkirch (DE); Mader, Alfons, 88316, Isny (DE); Stempfle, Johann, 89284, Pfaffenhofen (DE)
(74) Vertreter: Thun, Clemens

(57) **Zusammenfassung**

Die Erfindung betrifft eine Elektromotoranordnung für ein medizinisches, insbesondere ein dentales Handstück, das ein Motorgehäuse (2) und einen Rotor (4) aufweist, der über ein erstes Lager (6) und ein zweites Lager (8) um eine Achse (*L*) drehbar in dem Motorgehäuse (2) angeordnet ist. Ein Stator (14) ist mit Bezug auf die Achse (*L*) um den Rotor (4) herum angeordnet. Das erste Lager (6) ist in einem ersten Lagerflansch (10) aufgenommen, das zweite Lager (8) in einem zweiten Lagerflansch (12). Beide Lagerflansche (10, 12) bestehen aus Metall und grenzen mit ihren Mantelflächen (101, 121) unmittelbar an das Motorgehäuse (2). Hierdurch lassen sich Laufgeräusche und Vibrationen reduzieren. Außerdem lässt sich ein vorzeitiger Verschleiß bzw. Ausfall verhindern.

## Beschreibung

Die vorliegende Erfindung betrifft eine Elektromotoranordnung für ein medizinisches, insbesondere ein dentales Handstück. Die Elektromotoranordnung umfasst einen Elektromotor, insbesondere einen Dentalkleinmotor, also einen kompakt gestalteten Elektromotor, der insbesondere zur Verwendung in zahnmedizinischen Handgeräten vorgesehen ist. Eine solche Elektromotoranordnung wird im Folgenden auch kurz als "Dentalmotor" oder "Dentalkleinmotor" bezeichnet.

Insbesondere betrifft die Erfindung eine Elektromotoranordnung, die dafür vorgesehen ist, über eine Kupplung mit einem medizinischen, insbesondere mit einem dentalen Hand- und Winkelstück, im Folgenden auch kurz "Handstück" genannt, verbunden zu werden, wobei das Handstück dazu ausgebildet ist, ein drehbar gelagertes Werkzeug aufzunehmen und wobei, wenn die Elektromotoranordnung mit dem Handstück wie vorgesehen gekoppelt ist, ein von der Elektromotoranordnung erzeugtes Drehmoment auf das Werkzeug übertragen werden kann. Eine entsprechende Anordnung ist beispielsweise aus der DE 33 32 627 A1 bekannt. Weiterhin kann insbesondere vorgesehen sein, dass mit Bezug auf die Elektromotoranordnung dem Handstück gegenüberliegend über eine weitere Kupplung ein Versorgungsschlauch angeschlossen wird, der zur Versorgung der Elektromotoranordnung bzw. des Handstücks dient und der beispielsweise Medienleitungen aufweist, durch die Medien wie beispielsweise Luft und/oder Wasser zur Bildung eines Sprays transportiert werden können. Auch eine Stromleitung und/oder eine Lichtleitung können in dem Versorgungsschlauch angeordnet sein.

Bei einer derartigen Elektromotoranordnung ist es erwünscht, dass der Rotor des Elektromotors im Betriebszustand möglichst wenig vibriert. Auch eine lange Lebensdauer des Elektromotors ist erwünscht. Daher wird üblicherweise eine möglichst exakte Lagerung des Rotors ohne Fluchtfehler angestrebt, insbesondere im Fall eines schnell laufenden Dentalmotors.

Aus dem Stand der Technik ist eine entsprechende Elektromotoranordnung bekannt, die ein Motorgehäuse aufweist, in dem auf derjenigen Seite, die zur Handstück-Kupplung weist, eine Lagerstelle für den Rotor angeformt ist; auf der gegenüberliegenden, also der "hinteren" Seite ist in dem Motorgehäuse ein weiterer, also "hinterer" Lagerflansch zentriert. Aus der DE 10 2007 048 340 A1 ist eine entsprechende Elektromotoranordnung bekannt, bei der die Lagerstellen im Statorkörper direkt integriert sind. Die Bauteile für diese bekannten Elektromotoranordnungen sind zum Teil schwierig herzustellen. Außerdem besteht die Gefahr von Fluchtfehlern zur idealen Motorachse und der Lagersitz kann durch thermische Einwirkungen durch die Motorspule bzw. eine Sterilisation verformt werden, so dass im Weiteren Kugellageraußenringe der Lager verformt werden und eine Lageranstellung durch Federn versagt. Beides führt zu einer Zunahme von Laufgeräuschen, Vibrationen und vorzeitigem Verschleiß bzw. Ausfall.

Der Erfindung liegt die Aufgabe zugrunde, eine entsprechende Elektromotoranordnung anzugeben, die im Betrieb weniger vibriert und dabei eine längere Lebensdauer aufweist.

Diese Aufgabe wird gemäß der Erfindung mit dem in dem unabhängigen Anspruch 1 genannten Gegenstand gelöst. Bevorzugte Ausführungsarten der Erfindung sind in den vom Anspruch 1 abhängigen Ansprüchen angegeben.

Gemäß der Erfindung ist eine Elektromotoranordnung für ein medizinisches, insbesondere ein dentales Handstück vorgesehen, das ein Motorgehäuse aufweist sowie einen Rotor, der über ein erstes Lager und ein zweites Lager um eine Achse drehbar in dem Motorgehäuse angeordnet ist; außerdem weist die Elektromotoranordnung einen Stator auf, der mit Bezug auf die Achse um den Rotor herum angeordnet ist. Weiterhin weist die Elektromotoranordnung einen ersten Lagerflansch auf, in dem das erste Lager aufgenommen ist und einen zweiten Lagerflansch, in dem das zweite Lager aufgenommen ist. Der erste Lagerflansch besteht aus Metall und weist eine erste Mantelfläche auf, die unmittelbar an das Motorgehäuse angrenzend angeordnet ist. Der zweite Lagerflansch besteht aus Metall und weist eine zweite Mantelfläche auf, die ebenfalls unmittelbar an das Motorgehäuse angrenzend angeordnet ist.

Hierdurch lassen sich Laufgeräusche und Vibrationen reduzieren. Außerdem lässt sich ein vorzeitiger Verschleiß bzw. Ausfall verhindern.

Vorteilhaft ist der Stator zwischen dem ersten Lagerflansch und dem zweiten Lagerflansch eingespannt angeordnet dabei und vorzugsweise durch den ersten Lagerflansch und den zweiten Lagerflansch mit Bezug auf die Achse radial in dem Motorgehäuse zentriert. Eine negative Beeinflussung einer Lagerstelle durch Verzug bzw. Durchmesseränderung des Stators infolge Erwärmung einer Wicklung des Stators bzw. Verformung durch Sterilisation wird somit verhindert oder zumindest deutlich reduziert. Es ergibt sich eine besonders kurze Toleranzkette für die Lagervorspannung, welche im Wesentlichen durch die Länge des Stators längs der Achse sowie den Abstand von Anlageschultern für Kugellager auf einer Welle des Rotors bestimmt ist.

Vorteilhaft weist die Elektromotoranordnung weiterhin ein Kupplungselement auf, insbesondere in Form eines Kupplungszapfens, zur Verbindung der Elektromotoranordnung mit dem medizinischen Handstück, wobei das Kupplungselement vorzugsweise einstückig mit dem Motorgehäuse ausgebildet ist.

Es ist bekannt, dem Handstück durch eine Medienleitung ein Medium, beispielsweise Wasser oder Luft zuzuführen; hierdurch kann beispielsweise ein Spray zur Kühlung einer Bearbeitungsstelle gebildet werden. Insbesondere ist das Medium für ein Aufsatzwerkzeug vorgesehen, das durch den Elektromotor angetrieben werden kann und das auf das Handstück aufgesetzt ist, beispielsweise ein Rotationswerkzeug. Die Zufuhr des Mediums erfolgt gemäß dem Stand der Technik zunächst durch den Versorgungsschlauch, anschließend durch die Elektromotoranordnung und schließlich im Handstück. In der Elektromotoranordnung kann hierzu ein erster Medienleitungsabschnitt der Medienleitung angeordnet sein, der sich parallel zur Drehachse oder kurz Achse des Motors erstreckt. Üblicherweise ist hierfür ein kleines Rohrstück vorgesehen, das im Mantel des Motorgehäuses, außerhalb eines magnetischen Rückschlusses des Elektromotors, in einer Nut verlegt angeordnet ist. Bei einer Elektromotoranordnung, die einen Kupplungszapfen zur Verbindung mit dem Handstück aufweist, ist es weiterhin bekannt, dass sich ein zweiter Medienleitungsabschnitt durch den Kupplungszapfen erstreckt. Der zweite Medienleitungsabschnitt erstreckt sich daher üblicherweise mit Bezug auf die Drehachse radial weiter innen als der erste Medienleitungsabschnitt. Daher muss weiterhin eine Medienumleitung vorgesehen sein, die den ersten Medienleitungsabschnitt mit dem zweiten Medienleitungsabschnitt das Medium leitend verbindet und dabei den radialen Unterschied überwindet. Aus dem Stand der Technik ist bekannt, hierfür ein gekrümmtes Rohr vorzusehen oder eine Medienumleitung, die durch Vertiefungen in Stirnflächen des Motorgehäuses und der Kupplung gebildet ist. Problematisch ist hierbei, dass sich komplizierte Dichtstellen ergeben.

Der Erfindung liegt gemäß einem zweiten Aspekt im Weiteren die Aufgabe zugrunde, eine entsprechende Elektromotoranordnung anzugeben, die mit Bezug auf die Abdichtung im Bereich der Medienumleitung verbessert ist.

Diese Aufgabe wird gemäß der Erfindung mit dem im Anspruch 4 angegebenen Gegenstand gelöst. Besondere Ausführungen sind in den vom Anspruch 4 abhängigen Ansprüchen angegeben.

Gemäß dem zweiten Aspekt der Erfindung ist eine Elektromotoranordnung für ein medizinisches, insbesondere ein dentales Handstück vorgesehen, die ein Motorgehäuse aufweist, sowie einen Rotor, der über ein Lager um eine Achse drehbar in dem Motorgehäuse angeordnet ist, wobei das Lager in einem Lagerflansch gefasst angeordnet ist. Weiterhin weist die Elektromotoranordnung einen Stator auf, der mit Bezug auf die Achse um den Rotor herum angeordnet ist. Weiterhin weist die Elektromotoranordnung einen Kupplungszapfen auf, der um die Achse herum angeordnet ist sowie einen ersten Medienleitungsabschnitt zur Leitung eines Mediums, wobei sich der erste Medienleitungsabschnitt mit Bezug auf die Achse radial außerhalb des Rotors erstreckt. Weiterhin weist die Elektromotoranordnung einen zweiten Medienleitungsabschnitt zur weiteren Leitung des Mediums auf, der sich in dem Kupplungszapfen erstreckt, wobei der zweite Medienleitungsabschnitt radial näher an der Achse angeordnet ist, als der erste Medienleitungsabschnitt sowie eine Medienumleitung für eine das Medium leitende Verbindung zwischen dem ersten Medienleitungsabschnitt und dem zweiten Medienleitungsabschnitt. Die Medienumleitung ist dabei in dem Lagerflansch ausgebildet.

Hierdurch lässt sich die Abdichtung im Bereich der Medienumleitung vereinfachen.

Vorteilhaft weist die Elektromotoranordnung weiterhin einen Dichtsitz zu einer Abdichtung zwischen dem ersten Medienleitungsabschnitt und der Medienumleitung oder zwischen der Medienumleitung und dem zweiten Medienleitungsabschnitt auf, wobei der der Dichtsitz in dem Lagerflansch und/oder in dem Stator und/oder in dem Kupplungszapfen ausgebildet ist und wobei vorzugsweise in dem Dichtsitz ein O-Ring angeordnet ist.

Vorzugsweise ist der erste Medienleitungsabschnitt in den Stator integriert.

Es kann vorteilhaft auch vorgesehen sein, dass die Elektromotoranordnung zu einer Abdichtung zwischen dem ersten Medienleitungsabschnitt und der Medienumleitung oder zwischen der Medienumleitung und dem zweiten Medienleitungsabschnitt eine Flachdichtung aufweist, die an dem Lagerflansch anliegt.

Vorzugsweise weist der Lagerflansch eine radiale Bohrung aufweist, durch die ein Teil der Medienumleitung gebildet ist.

Aus dem Stand der Technik ist weiterhin bekannt, bei einer Medienleitung einen Rücksaugstopp vorzusehen, durch den verhindert wird, dass das Medium, also zum Beispiel Wasser, aus dem Handstück in die Elektromotoranordnung bzw. in den Versorgungsschlauch zurückgesaugt wird oder zurückfließt. Dabei ist bekannt, den Rücksaugstopp als Lippenventil auszubilden, das im Inneren des Motorgehäuses geschützt in axialer Richtung angeordnet ist. Hierbei besteht das Problem, dass dadurch die Erstreckung der Elektromotoranordnung in Richtung der Drehachse länger gestaltet werden muss. Alternativ ist bekannt, den Rücksaugstopp dadurch zu realisieren, dass an einer Auslassbohrung des Kupplungszapfens ein O-Ring angeordnet wird, der nur bei anliegendem Versorgungsdruck öffnet. Hierbei besteht jedoch die Gefahr, dass dieser O-Ring durch Reinigungs- und/oder Steckvorgänge zur Verbindung mit dem Handstück beschädigt oder aus seiner vorgesehenen Position heraus bewegt wird.

Gemäß der Erfindung ist vorzugsweise in der radialen Bohrung im Lagerflansch ein Schlauchelement aus elastischem Werkstoff angeordnet. Hierdurch kann ein Rücksaugstopp gebildet sein, der geschützt und dabei platzsparend angeordnet ist. Bei dem elastischen Werkstoff kann es sich beispielsweise um Gummi, Silikon oder Viton handeln. Das Schlauchelement ist dabei vorzugsweise so angeordnet, dass es an der Innenwand der Bohrung anliegt und - ohne Einwirkung äußerer Kräfte - eine Zulaufbohrung für das Medium von Seiten des Stators her verschließt. Durch die Eigenspannung kann das Schlauchelement an der Innenwand anliegen, bei Druck von der Zulaufseite kann das Schlauchelement von der Innenwand abheben und das Medium in Richtung Handstück hindurch fließen lassen. Im drucklosen Zustand liegt das Schlauchelement dementsprechend an der Innenwand an und verschließt die Zulaufbohrung, so dass das Medium nicht zurück zum Stator bzw. zum Versorgungsschlauch fließen kann.

Vorzugsweise weist die Elektromotoranordnung dabei weiterhin ein Zapfenelement auf, das derart angeordnet ist, dass es in das Schlauchelement hineinragt und Letzteres radial nach außen gegenüber dem Medium abdichtet. Hierdurch lässt sich insbesondere erzielen, dass das Schlauchelement nur begrenzt von der Innenwand abheben kann. Das Zapfenelement kann außerdem die Bohrung in radialer Richtung zum Umfang des Lagerflansches hin verschließen.

Alternativ zu r der zuvor beschriebenen Lösung könnte in der Medienumleitung auch ein Lippenventil angeordnet werden. Ferner besteht die Möglichkeit, den Lagerflansch integral in dem Gehäuse auszubilden.

Weiterhin betrifft die Erfindung ein Dentalinstrumententeil, das eine äußere Oberfläche aufweist, die aus Titan besteht. Bei dem Dentalinstrumententeil kann es sich beispielsweise um eine Elektromotoranordnung handeln, insbesondere um eine Elektromotoranordnung, wie sie weiter oben dargestellt ist.

Aus dem Stand der Technik ist bekannt, für Gehäuse und Hülsen dentaler Instrumente (Hand- und Winkelstücke, Turbinen) und auch dentale Motoren metallische Werkstoffe zu verwenden, beispielsweise rostfreien Stahl, Messing, Aluminium oder Titan. Zur Erzielung eines ansprechenden äußeren Erscheinungsbildes und eines gewissen Verschleißschutzes werden die Oberflächen der Stahl- und Messingteile durch chemische bzw. galvanische Beschichtungen (NiCr) bzw. PVD-Beschichtung (PVD: physical vapour deposition) veredelt, wodurch auch ein Schutz gegenüber Aufbereitungsverfahren wie Desinfektion bzw. Thermodesinfektion und Sterilisation gegeben ist. Problematisch ist hierbei, dass PVD-Beschichtungen einen vergleichsweise hohen apparativen Aufwand erfordern und teuer sind. Außerdem betragen die dabei erzielbaren Schichtstärken nur wenige Mikrometer. Des Weiteren besteht die Gefahr, dass die Schichten bei ungenügender Vorbehandlung (z. B. Reinigung) bzw. mechanischem Stress (z. B. Deformation) vom Basismaterial abplatzen. Ein weiterer Nachteil dieser Gehäuseteile aus Stahl / Messing ist deren vergleichsweise hohes Gewicht.

Gehäuse und Hülsen aus Aluminium lassen sich kostengünstig herstellen und weisen eine vergleichsweise geringe Masse auf. Durch hartanodische Schichten können in diesem Fall die Oberflächen auch gegenüber Verschleiß geschützt werden. Allerdings halten die Oberflächen den bei der Aufbereitung angewandten Medien nicht dauerhaft stand.

Gehäuse und Hülsen aus Titan haben eine vergleichsweise geringe Masse. Titan hält ohne zusätzliche Beschichtung einem Angriff durch Medien und Verfahren, wie sie im Rahmen einer Aufbereitung üblicherweise eingesetzt werden, stand. Zudem haben sie eine ausgezeichnete Biokompatibilität, so dass insbesondere keine allergischen Reaktionen zu befürchten sind, also insbesondere weder bei einem Patienten noch bei einem Anwender. Der Verschleißschutz ist allerdings begrenzt; zudem kommt es zu Beeinträchtigungen des äußeren Erscheinungsbilds durch Gebrauchsspuren wie Kratzer.

Besonders hohe Anforderungen an die Verschleiß- bzw. Kratzfestigkeit werden an die Oberfläche eines Kupplungszapfens von Dentalkupplungen (z. B. Multiflex, Intramatic) gestellt. Hierbei sind sehr enge Passungen gefordert, die sich auch im Betrieb durch das Aufsetzen von harten Gegenständen, also beispielsweise Hand- und Winkelstücken oder Turbinen, nicht verändern sollen bzw. dürfen. Das Aufsetzen von entsprechenden Wechselinstrumenten erfolgt in der zahnärztlichen Praxis sehr häufig. Um einen Verschleiß und ein "Fressen" an diesen hochbelasteten Bauteilen zu vermeiden, werden diese aus Stahl hergestellt und vergütet. Hierdurch entstehende ergonomische Nachteile durch das höhere Gewicht werden dabei in Kauf genommen. Titan und dessen Legierungen weisen im Allgemeinen schlechte tribologische Eigenschaften auf. Dies zeigt sich in vergleichsweise hohen Reibungskoeffizienten, Adhäsionsverschleiß und einer starken Tendenz zum "Fressen". Für Kupplungszapfen werden daher Titan und dessen Legierungen nicht verwendet.

Bei dentalen Instrumenten (Hand- und Winkelstücke, Turbinen) und Motoren (Luft/E-Motoren) sind ergonomische Aspekte wie Gewicht, aber auch robuste und kratzfeste Oberflächen mit einer guten Beständigkeit gegenüber den bei einer Aufbereitung verwendeten Medien (Heißdampf; alkalische und saure Reiniger; Kohlenwasserstoffverbindungen u. a.) und Verfahren (Temperatur, Druck, Vakuum) und eine gute Haptik entscheidend.

Der Erfindung liegt daher gemäß einem weiteren Aspekt die Aufgabe zugrunde, ein Medizininstrumententeil, insbesondere ein Dentalinstrumententeil anzugeben, das durch Aufbereitung nicht geschädigt wird und dabei ergonomisch verbessert ist.

Diese Aufgabe wird durch den im Anspruch 13 genannten Gegenstand gelöst. Besondere Ausführungsarten sind in den vom Anspruch 13 abhängigen Ansprüchen angegeben.

Gemäß diesem Aspekt der Erfindung ist ein Medizininstrumententeil, insbesondere ein Dentalinstrumententeil vorgesehen, das eine äußere Oberfläche aufweist, die aus Titan besteht. Bei dem Dentalinstrumententeil kann es sich beispielsweise um eine Elektromotoranordnung handeln, wie sie weiter oben dargestellt ist. Die Oberfläche ist dabei durch einen Härteprozess vergütet.

Hierdurch wird erzielt, dass das Medizininstrumententeil mit besonders geringem Gewicht ausgeführt und daher ergonomisch besonders vorteilhaft gestaltet werden kann. Außerdem ist es besonders kratz- und abriebfest und weist eine besonders geringe Kaltschweißneigung auf. Weiterhin ist das Medizininstrumententeil besonders resistent gegenüber gebräuchlichen Aufbereitungsmethoden und -verfahren wie beispielsweise Thermodesinfektion oder Heißdampfsterilisation im Autoklaven.

Vorteilhaft ist dabei die Oberfläche basierend auf einem thermochemischen Diffusionsverfahren vergütet, wobei es sich vorzugsweise bei dem thermochemischen Diffusionsverfahren um das so genannte "Oxygen Diffusion Hardening" handelt.

Besonders bevorzugt weist das Dentalinstrumententeil einen Kupplungszapfen auf, der zur Verbindung mit einem weiteren Dentalinstrumententeil vorgesehen ist, beispielsweise mit einem Hand- und Winkelstück, wobei es sich bei der äußeren Oberfläche um eine äußere Oberfläche des Kupplungszapfens handelt.

Dentale Instrumente, insbesondere Luft/E-Motoren beinhalten Bauteile, die regelmäßig gewartet werden müssen bzw. die für einen Wechsel, beispielsweise im Fall einer Reparatur leicht zugänglich sein müssen, wie beispielsweise eine Halogenlampe oder eine LED.

Zur Vermeidung von Streulicht und zum Schutz der elektrischen Kontakte sind Halogenlampen und deren Anschlussstecker mittels Hülsen oder Schutzkappen oder dergleichen geschützt in dem Instrument angeordnet.

Hierbei ist es beispielsweise bekannt, eine Hülse mittels einer Gewindevorrichtung an einem Motorgehäuse zu befestigen. Hierbei besteht das Problem, dass dünne, kurze Gewinderinge durch vergleichsweise geringe Kräfte, wie sie beispielsweise bereits zum Überwinden der Gewindereibung aufgebracht werden müssen, deformiert werden und somit umso stärker am Gewinde haften. Ein Lösen der Gewindeverbindung ist nur mit einem Druck möglich, der mehr oder weniger gleichförmig über den ganzen Umfang verteilt ist. Üblicherweise werden zum Lösen zwei Finger verwendet, wobei es mit zwei Fingern verhältnismäßig schwer ist einen entsprechend gleichförmigen Druck zu erzeugen. Weiterhin kann sich in der Praxis durch unsachgemäße Reinigung und Pflege im Gewinde Schmutz ablagern, was dazu führen kann, dass zum Lösen noch deutlich größere Momente erforderlich sind. Damit wird der Effekt "deformierte Hülse und Löseprobleme" noch verstärkt.

Weiterhin ist aus dem Stand der Technik bekannt, dass Hülsen bzw. Schutzkappen aufgeklipst werden und über federnde Bolzen/Kugeln gehalten werden. In diesem Fall lassen sich die Hülsen auch bei mäßiger Verschmutzung abziehen. Allerdings erfordert die Bauweise Kugel/Bolzen mit Zylinderfeder einen größeren radialen Bauraum, was einer insgesamt kompakten Ausführung entgegen steht. Bei Eindringen von Schmutz, Ablagerungen und dergleichen aufgrund unzulänglicher Pflege in dem Bewegungsraum der Kugel ist auch bei dieser Lösung ein Abziehen der Schutzhülse erschwert.

Weiterhin ist bekannt, eine Hülse bzw. Schutzkappe mit Hinterschnitt aufzuklipsen, wobei zum Lösen die Hülse gedrückt bzw. deformiert wird. Das Aufklipsen einer runden Hülse auf einen ovale bzw. abgeflachten Sitz am Grundkörper ist zwar vor allem für dünne, kurze Hülsen und Schutzkappen eine elegante Lösung. Durch Anreicherung von Verschmutzungen bzw. Ablagerungen im Bewegungsraum für die Hülse beim Lösen wird dieses Lösen der Hülse durch Deformation und Anpassen an die ovale Form des Grundkörpers erschwert bzw. verhindert; der Hinterschnitt der Hülse hebt sich hierbei aus dem Einstich am Grundkörper.

Der Erfmdung liegt daher im Weiteren die Aufgabe zugrunde, ein Dentalinstrument anzugeben, das einen verbesserten Haltemechanismus für eine Hülse oder Schutzkappe oder dergleichen aufweist.

Diese Aufgabe wird mit dem im Anspruch 16 genannten Gegenstand gelöst. Eine besondere Ausführung ist im Anspruch 17 angegeben.

Gemäß diesem Aspekt der Erfindung ist ein Dentalinstrument vorgesehen, das ein Gehäuse aufweist und ein Instrumententeil, das abnehmbar an dem Gehäuse angeordnet ist. Das Instrumententeil weist dabei einen ringförmigen Bereich auf, der eine äußere Umfangsfläche des Gehäuses umgreifend angeordnet ist. Auf der äußeren Umfangsfläche ist eine Vertiefung angeordnet, in der wenigstens ein vorzugsweise kugelförmiges, elastisches Halteteil aufgenommen ist, wobei in dem ringförmigen Bereich eine Hinterschneidung angeordnet ist, in die das elastische Halteteil eingreift.

Auf diese Weise ist ein Haltemechanismus geschaffen, der sich auch bei einem kräftigeren Zudrücken mit zwei Fingern und unter dem Einfluss von Ablagerungen und Verschmutzungen durch unzulängliche Pflege im Spalt zwischen dem Instrumententeil und dem Gehäuse leicht und zuverlässig öffnen und schließen lässt. Beispielswiese eignet sich der Haltemechanismus besonders gut für ein Instrumententeil in Form einer dünnwandige Hülse oder Schutzkappe, die beispielsweise an einer Elektromotoranordnung angeordnet ist.

Vorzugsweise ist die Vertiefung derart ausgebildet, dass das elastische Halteteil das von der Vertiefung definierte Volumen nur teilweise ausfüllt. Auf diese Weise ist durch die Vertiefung ein "efbrmationsraum" gebildet, der für eine Deformation des elastischen Halteteils bei einem Abziehen bzw. Aufsetzen des Instrumententeils zur Verfügung steht.

Die Erfindung wird im Folgenden anhand von Ausführungsbeispielen und mit Bezug auf die Zeichnungen näher erläutert. Es zeigen:
- Fig. 1: einen Längsschnitt durch ein Ausführungsbeispiel einer erfindungsgemäßen Elektromotoranordnung mit metallischen Lagerflanschen,
- Fig. 2: einen Längsschnitt durch ein Ausführungsbeispiel einer erfindungsgemäßen Elektromotoranordnung mit einer Medienumleitung,
- Fig. 3: den in Fig. 2 gezeigten Lagerflansch in separiertem Zustand,
- Fig. 4: eine Variation der in Fig. 2 gezeigten Elektromotoranordnung mit einem integrierten Lagerflansch,
- Fig. 5: eine Variation der in Fig. 2 gezeigten Elektromotoranordnung mit einem Rücksaugstopp,
- Fig. 6: eine Darstellung eines Ausschnitts aus Fig. 5,
- Fig. 7: eine weitere Variation der in Fig. 2 gezeigten Elektromotoranordnung mit einem Rücksaugstopp,
- Fig. 8: eine Darstellung eines Ausschnitts aus Fig. 7,
- Fig. 9: eine perspektivische Ansicht eines Dentalinstrumententeils,
- Fig. 10: einen dazugehörigen Längsschnitt,
- Fig. 11: eine perspektivische Ansicht eines weiteren Dentalinstrumententeils,
- Fig. 12: einen dazugehörigen Längsschnitt,
- Fig. 13: eine perspektivische Ansicht einer Turbine mit einer Multiflexkupplung,
- Fig. 14: eine perspektivische Ansicht eines Hand- und Winkelstücks mit einer dazugehörigen Elektromotoranordnung,
- Fig. 15: eine Prinzipskizze zu einem Dentalinstrument mit einem Haltemechanismus für ein Instrumententeil,
- Fig. 16: einen Längsschnitt durch eine Elektromotoranordnung mit einem erfindungsgemäßen Haltemechanismus für eine Hülse,
- Fig. 17: ein Detail aus Fig. 16 und
- Fig. 18: einen Querschnitt durch einen erfindungsgemäßen Haltemechanismus.

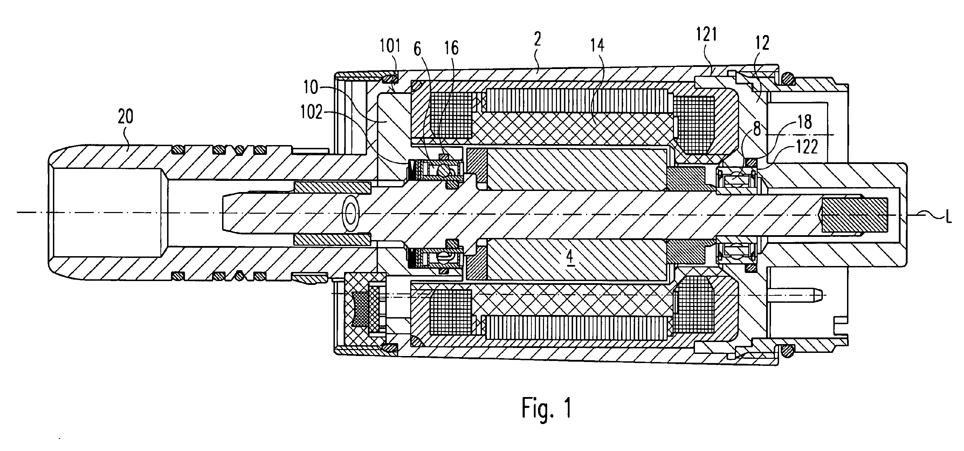

In Fig. 1 ist ein Längsschnitt durch ein erstes Ausführungsbeispiel einer erfindungsgemäßen Elektromotoranordnung gezeigt. Die Elektromotoranordnung weist ein Motorgehäuse 2 auf sowie einen Rotor 4, der über ein erstes Lager 6 und ein zweites Lager 8 um eine Achse L drehbar in dem Motorgehäuse 2 angeordnet ist. Außerdem weist die Elektromotoranordnung einen Stator 14 auf, der mit Bezug auf die Achse *L* um den Rotor 4 herum angeordnet ist. Der Stator 14 kann Kunststoff aufweisen. Weiterhin weist die Elektromotoranordnung einen ersten Lagerflansch 10 auf, in dem das erste Lager 6 aufgenommen ist und einen zweiten Lagerflansch 12, in dem das zweite Lager 8 aufgenommen ist.

Der erste Lagerflansch 10 besteht aus Metall bzw. ist aus Metall ausgebildet und weist eine erste Mantelfläche 101 auf, die unmittelbar an das Motorgehäuse 2 angrenzend angeordnet ist. Mit Bezug auf die Achse *L* weist die erste Mantelfläche 101 nach außen und grenzt an eine nach innen weisende Fläche des Motorgehäuses 2. Der zweite Lagerflansch 12 besteht ebenfalls aus Metall bzw. ist aus Metall ausgebildet, und weist eine zweite Mantelfläche 121 auf, die unmittelbar an das Motorgehäuse 2 angrenzend angeordnet ist. Mit Bezug auf die Achse *L* weist die zweite Mantelfläche 121 nach außen und grenzt ebenfalls an eine weitere oder an die nach innen weisende Fläche des Motorgehäuses 2.

Bei dem ersten Lager 6 und bei dem zweiten Lager 8 kann es sich jeweils um ein Kugellager handeln. Die beiden Lager 6, 8 können jeweils unmittelbar an den jeweiligen Lagerflansch 10, 12 angrenzen, also von dem jeweiligen Lagerflansch 10, 12 gefasst sein.

Das Motorgehäuse 2 ist vorzugsweise einstückig ausgebildet.

Vorteilhaft ist der Stator 14 zwischen dem ersten Lagerflansch 10 und dem zweiten Lagerflansch 12 eingespannt angeordnet. Dabei grenzt der Stator 14 vorteilhaft einerseits unmittelbar an den ersten Lagerflansch 10 und andererseits, ebenfalls unmittelbar, an den zweiten Lagerflansch 12. Außerdem ist der Stator 14 vorzugsweise durch den ersten Lagerflansch 10 und den zweiten Lagerflansch 12 mit Bezug auf die Achse *L* radial in dem Motorgehäuse 2 zentriert. Eine mögliche Form- oder Größenänderung des Stators 14, beispielswiese durch thermische Ausdehnung, kann sich durch diese Anordnung nicht unmittelbar auf die beiden Lager 6, 8 auswirken. Auch die Anfälligkeit der Elektromotoranordnung im Fall einer Sterilisation ist dadurch deutlich vermindert. Insgesamt führt dies dazu, dass im Betrieb des Elektromotors weniger Vibrationen entstehen.

Wie beim gezeigten Ausführungsbeispiel der Fall, kann die Elektromotoranordnung weiterhin ein Kupplungselement aufweisen, insbesondere in Form eines Kupplungszapfens 20, und zwar zur Verbindung der Elektromotoranordnung mit dem medizinischen bzw. dentalen Handstück. Dabei ist das Kupplungselement bzw. der Kupplungszapfen 20 vorzugsweise einstückig mit dem Motorgehäuse 2 ausgebildet. Hierdurch lassen sich Vibrationen bzw. Laufgeräusche weitergehend vermindern.

Wie aus Fig. 1 beispielhaft hervorgeht, kann insbesondere vorgesehen sein, dass der erste Lagerflansch 10 und der zweite Lagerflansch 12 jeweils separat ausgebildet sind. Weiterhin kann der erste Lagerflansch 10 eine Anlageschulter 102 für das erste Lager 6 aufweisen und der zweite Lagerflansch 12 eine weitere Anlageschulter 122, und zwar zur Anlage des zweiten Lagers 8.

Zwischen dem ersten Lager 6 und dem ersten Lagerflansch 10 kann zur Abdichtung ein erster O-Ring 16 vorgesehen sein, analog zwischen dem zweiten Lager 8 und dem zweiten Lagerflansch 12 ein zweiter O-Ring 18.

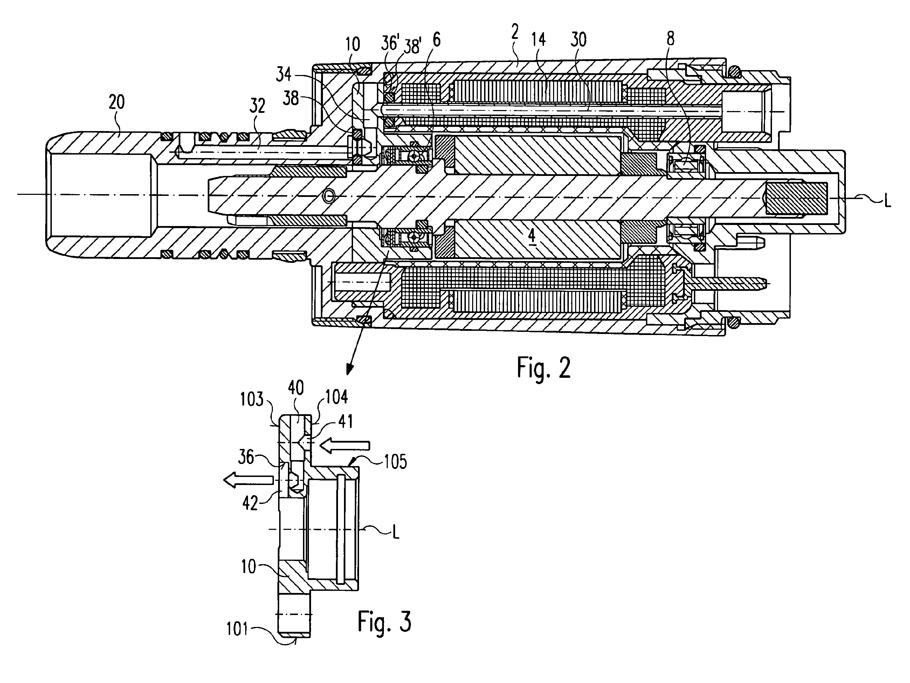

In Fig. 2 ist ein Ausführungsbeispiel einer Elektromotoranordnung mit einer Medienumleitung gezeigt. Die Bezugszeichen sind analog gebraucht. Soweit im Folgenden nicht anders dargestellt, kann die Elektromotoranordnung so ausgeführt sein, wie weiter oben mit Bezug auf die Fig. 1 dargestellt.

Die Elektromotoranordnung weist ein Motorgehäuse 2 auf, sowie einen Rotor 4, der über ein Lager 6 um eine Achse *L* drehbar in dem Motorgehäuse 2 angeordnet ist, wobei das Lager 6 in einem Lagerflansch 10 gefasst angeordnet ist; weiterhin weist die Elektromotoranordnung einen Stator 14 auf, der mit Bezug auf die Achse *L* um den Rotor 4 herum angeordnet ist, sowie einen Kupplungszapfen 20, der um die Achse *L* herum angeordnet ist, weiterhin einen ersten Medienleitungsabschnitt 30 zur Leitung eines Mediums, wobei sich der erste Medienleitungsabschnitt 30 mit Bezug auf die Achse radial außerhalb des Rotors erstreckt sowie einen zweiten Medienleitungsabschnitt 32 zur weiteren Leitung des Mediums, der sich in dem Kupplungszapfen 20 erstreckt. Der zweite Medienleitungsabschnitt 32 ist dabei radial näher an der Achse *L* angeordnet, als der erste Medienleitungsabschnitt 30. Weiterhin weist die Elektromotoranordnung eine Medienumleitung 34 für eine das Medium leitende Verbindung zwischen dem ersten Medienleitungsabschnitt 30 und dem zweiten Medienleitungsabschnitt 32 auf, wobei diese Medienumleitung 34 in dem Lagerflansch 10 ausgebildet ist. Durch die Ausbildung in dem Lagerflansch 10 lässt sich die Abdichtung in den Übergangsbereichen erster Medienleitungsabschnitt 30 - Medienumleitung 34 einerseits und Medienumleitung 34 - zweiter Medienleitungsabschnitt 32 andererseits leichter bzw. besser gestalten.

Wie aus Fig. 3 beispielhaft hervorgeht, in der der Lagerflansch 10 separiert gezeigt ist, kann die Elektromotoranordnung hierzu insbesondere einen Dichtsitz 36 zu einer Abdichtung zwischen der Medienumleitung 34 und dem zweiten Medienleitungsabschnitt 32 aufweisen und/oder einen weiteren, in Fig. 2 beispielhaft bezeichneten Dichtsitz 36' zu einer Abdichtung zwischen dem ersten Medienumleitungsabschnitt 30 und der Medienumleitung 34. Der Dichtsitz 36 kann - wie in den Figuren 2 und 3 gezeigt - in dem Lagerflansch 10 ausgebildet sein. Der weitere Dichtsitz 36' kann in dem Stator 14 ausgebildet sein. Ein entsprechender Dichtsitz könnte alternativ auch in dem Kupplungszapfen 20 ausgebildet sein. Vorzugsweise ist in dem Dichtsitz 36 bzw. in dem weiteren Dichtsitz 36' ein O-Ring 38 bzw. 38' angeordnet.

Der Lagerflansch 10 kann dem weiter oben mit Bezug auf Fig. 1 mit "erster Lageflansch" bezeichneten Lagerflansch 10 entsprechen. Der Lagerflansch 10 kann eine erste Planseite 103 und eine zweite Planseite 104 aufweisen, die vorzugsweise parallel zueinander ausgebildet sind. Insbesondere können die erste Planseite 103 und die zweite Planseite 104 jeweils normal zur Achse *L* ausgebildet sein. Die Medienumleitung 34 kann dabei zwischen der ersten Planseite 103 und der zweiten Planseite 104 ausgebildet sein. Die erste Planseite 103 und die zweite Planseite 104 können sich nach radial nach außen bis zu der Mantelfläche 101 erstrecken, die weiter oben entsprechend dem Kontext mit "erster" Mantelfläche 101 bezeichnet ist.

Des Weiteren kann der Lagerflansch 10 einen Ansatz 105 aufweisen, der sich - vorzugsweise unmittelbar von der zweiten Planseite 104 aus - zu derjenigen Seite hin erstreckt, die dem Kupplungszapfen 20 gegenüberliegt, wobei sich der Ansatz 105 in radialer Richtung weniger weit erstreckt als die Mantelfläche 101 und das Lager 6 radial umgibt, also mit anderen Worten das erste Lager 6 im Bereich des Ansatzes 105 in dem Lagerflansch 10 gefasst ist.

Wie weiterhin in Fig. 2 beispielhaft gezeigt, kann der erste Medienleitungsabschnitt 30 in den Stator 14 integriert sein. Hierdurch ist eine besonders platzsparende, kompakte Gestaltung der Elektromotoranordnung ermöglicht.

Zu einer Abdichtung zwischen dem ersten Medienleitungsabschnitt 30 und der Medienumleitung 34 oder zwischen der Medienumleitung 34 und dem zweiten Medienleitungsabschnitt 32 kann alternativ (in den Figuren nicht gezeigt) eine Flachdichtung vorgesehen sein, die an dem Lagerflansch 10 anliegt.

Vorteilhaft weist der Lagerflansch 10 eine radiale Bohrung 40 auf, durch die ein Teil der Medienumleitung 34 gebildet ist. Die Bohrung 40 kann insbesondere zwischen der ersten Planfläche 103 und der zweiten Planfläche 104 vorgesehen sein. Außerdem kann in dem Lagerflansch 10 eine zweite Bohrung 41 vorgesehen sein, die insbesondere parallel zur Achse *L* ausgerührt sein kann, und die zur Verbindung zwischen dem Stator 14 und der radialen Bohrung 40 dient, also sozusagen eine Zulaufbohrung für das Medium von Seiten des Stators her. Entsprechend kann eine dritte Bohrung 42 vorgesehen sein, die zur Verbindung zwischen der radialen Bohrung 40 und dem Kupplungszapfen 20 dient. Wie aus Fig. 3 hervorgeht, kann durch die dritte Bohrung 42 beispielswiese unmittelbar der Dichtsitz 36 gebildet sein.

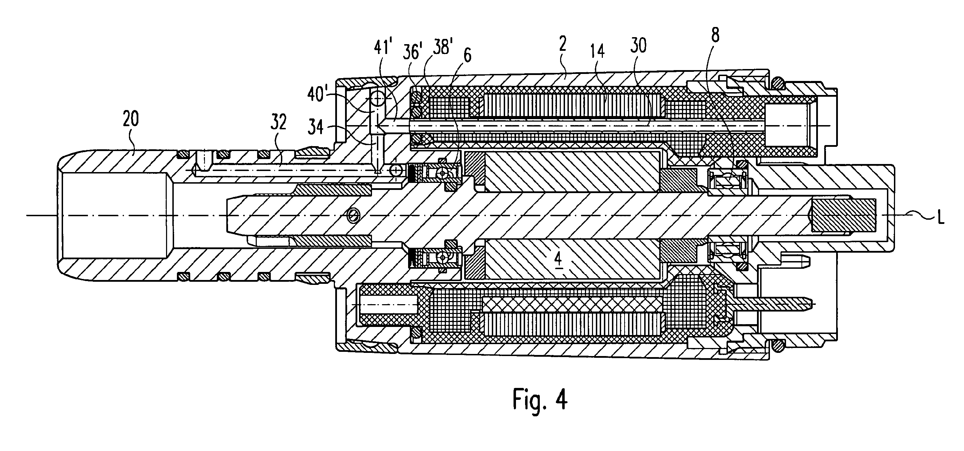

Eine erste Variante des Ausführungsbeispiels von Fig. 2 ist in Fig. 4 gezeigt, wobei gleiche Elemente mit den gleichen Bezugszeichen versehen sind. In diesem Fall wird der Lagerflansch nicht durch ein separates Bauteil gebildet sondern ist integraler Bestandteil des Gehäuses 2. Auch hier sind dann in dem vorderen Bereich des Gehäuses 2 zwei Bohrungen 40' und 4 1 ' ausgebildet, über welche letztendlich eine Verbindung zwischen dem ersten Medienleitungsabschnitt 30 und dem zweiten Medienleitungsabschnitt 32 erzielt wird. Der Verzicht auf ein separates Bauteil, welches den Lagerflansch bildet, führt zu einer Reduzierung der abzudichtenden Verbindungsstellen, was letztendlich zur einer höheren Betriebssicherheit, einer einfacheren Herstellung sowie zu einer Reduzierung der Herstellungskosten führt.

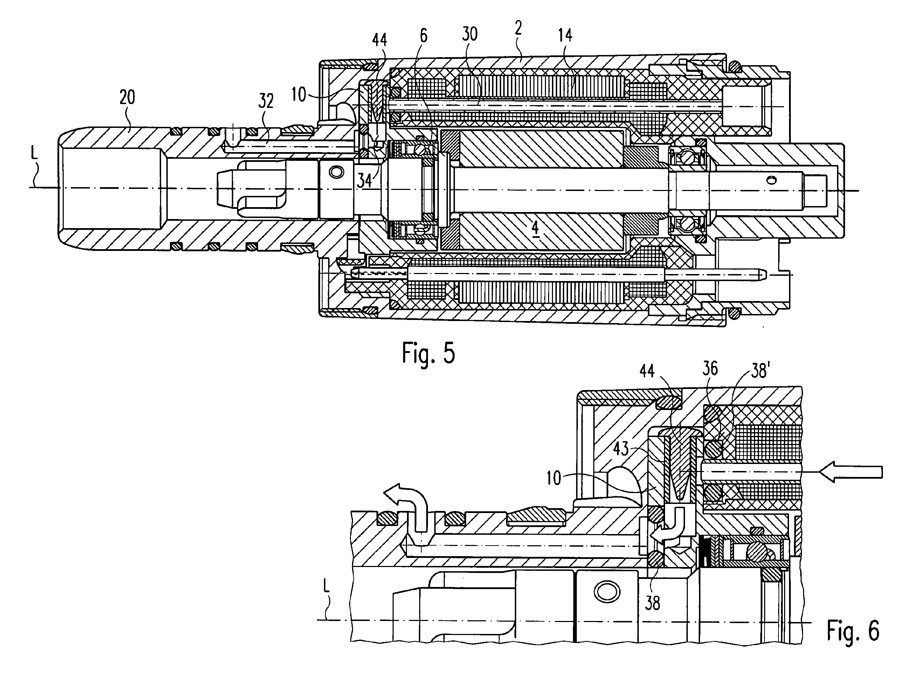

In Fig. 5 ist eine Variante gezeigt, bei der in der Medienumleitung 34 ein Rücksaugstopp angeordnet ist. Fig. 6 zeigt ein Detail aus Fig. 5. Hierbei ist in der radialen Bohrung 40 ein Schlauchelement 43 aus elastischem Werkstoff angeordnet. Das Schlauchelement 43 besteht beispielsweise aus Gummi, Silikon oder Viton und ist so gestaltet, dass es an einer Innenwand der radialen Bohrung 40 derart anliegt, dass es - ohne Einwirkung äußerer Kräfte - die zweite Bohrung 41 für das Medium von Seiten des Stators 14 her verschließt, aber bei Druck von dieser Zulaufseite her von der Innenwand abhebt und das Medium in Richtung Handstück hindurch fließt. Somit kann das Medium nicht vom Kupplungszapfen 20 aus zurück zum Stator 14 bzw. zum Versorgungsschlauch fließen, so dass also ein Rücksaugstopp gebildet ist.

Vorteilhaft ist dabei weiterhin ein Zapfenelement 44 vorgesehen, das derart angeordnet ist, dass es in das Schlauchelement 43 hineinragt und Letzteres radial nach außen gegenüber dem Medium abdichtet. Vorzugsweise ist das Zapfenelement 44 derart ausgestaltet, dass das Schlauchelement 43 durch das Zapfenelement 44 gestützt wird und nur begrenzt von der Innenwand der radialen Bohrung 40 abheben kann. Das Zapfenelement 44 kann außerdem die Bohrung 40 in radialer Richtung zum Umfang des Lagerflansches 10 hin verschließen.

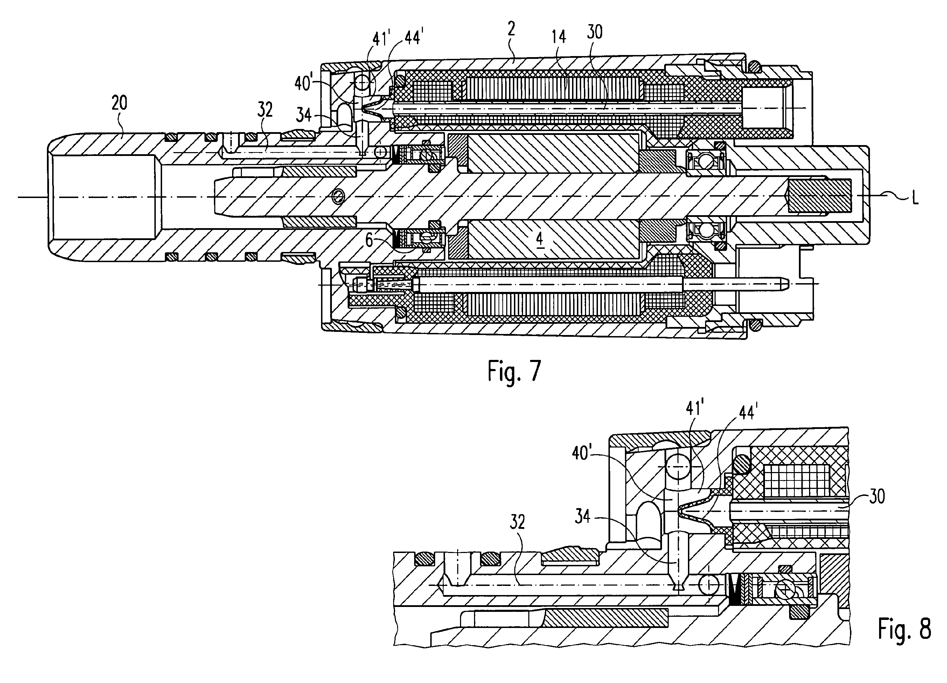

Alternativ zu der Verwendung des Zapfenelements 44 kann der Rücksaugstopp auch durch den Einsatz eines Lippenventils realisiert werden, wie dies in den Fig. 7 und 8 dargestellt ist. In diesem Fall ist die Bohrung 41' etwas länger und mit einem größeren Durchmesser ausgebildet, um die Aufnahme des Lippenventils 44' zu ermöglichen. Dabei kann der Lagerflansch wiederum integraler Bestandteil des Gehäuses 2 sein, wie dies in den Fig. 7 und 8 gezeigt ist, oder auch durch ein separates Element gebildet werden, analog zu der Variante gemäß Fig. 3. Ferner wäre es auch denkbar, das Lippenventil 44' in der Radialbohrung 40' anzuordnen.

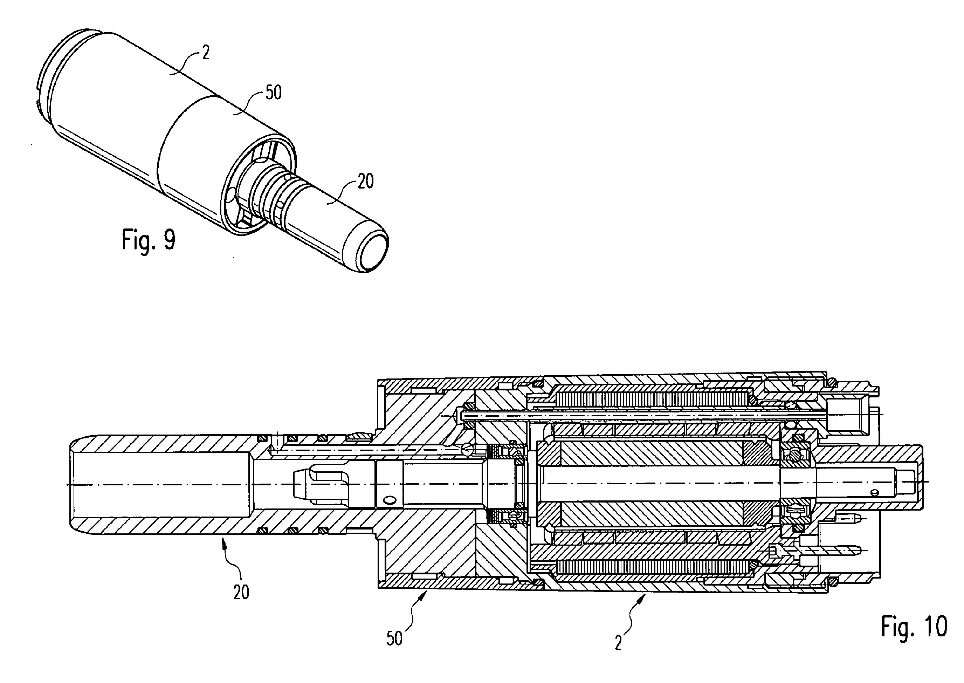

In den Figuren 9 und 10 ist eine perspektivische Ansicht eines Dentalinstrumententeils gezeigt, in Fig. 10 ein dazugehöriger Längsschnitt. Wie in den beiden Figuren beispielhaft gezeigt, kann es sich bei dem Dentalinstrumententeil um eine Elektromotoranordnung handeln. Das Dentalinstrumententeil, weist eine äußere Oberfläche auf, die aus Titan besteht; die Oberfläche ist durch einen Härteprozess vergütet. Insbesondere kann die Oberfläche basierend auf einem thermochemischen Diffusionsverfahren vergütet sein.

Zu den thermochemischen Diffusionsverfahren für Titan zählen Gasnitrieren, Lasergasnitrieren, Gasnitrocarburieren, Borieren und Oxidieren. Vorzugsweise handelt es sich bei dem thermochemischen Diffusionsverfahren um das so genannte "Oxygen Diffusion Hardening" (ODH). Da sich diese Schichten aus dem Grundstoff bilden, neigen sie - im Unterschied zu PVD-Schichten - nicht zum Abplatzen. Es werden keine werkstofffremden Beschichtungsmaterialien verwendet. Die Schichtdicken sind steuerbar, und zwar über Prozessparameter wie Einwirkzeit, Temperatur und Druck. Die vergütete Oberfläche ist besonders gut bioverträglich.

Für besondere tribologische Anforderungen kann die mittels thermochemischer Diffusionsverfahren hergestellte Oberflächenschicht als Stützstruktur für eine DLC-Hartstoffbeschichtung "diamond-like-carbon" (PVD-Verfahren) oder einen reine CVD Diamantbeschichtung verwendet werden.

Vorzugsweise weist das Dentalinstrumententeil einen Kupplungszapfen 20 auf, der zur Verbindung mit einem weiteren Dentalinstrumententeil vorgesehen ist, beispielsweise mit einem Hand-und Winkelstück, wobei es sich bei der äußeren Oberfläche um eine äußere Oberfläche des Kupplungszapfens 20 handelt. Am Kupplungszapfen 20 ist die Beanspruchung durch das Aufsetzen bzw. Abziehen des Handstücks besonders groß. Es kann vorgesehen sein, dass nur der Kupplungszapfen 20 vergütet ist, es kann aber auch vorgesehen sein, dass auch das Motorgehäuse 2 entsprechend vergütet ist.

Die durch die ODH-Vergütung erzeugte Schichtdicke kann beispielsweise zwischen 5 und 25 Mikrometer betragen. Die erzielte Oberflächenhärte kann beispielsweise zwischen 500 und 1000 HV liegen.

Wenn es sich bei dem thermochemischen Diffusionsverfahren um Borieren handelt, kann die durch die Vergütung erzeugte Schichtdicke beispielsweise zwischen 2 und 25 Mikrometer betragen und die erzielte Oberflächenhärte beispielsweise zwischen 2000 und 4000 HV.

Wenn es sich bei dem thermochemischen Diffusionsverfahren um Nitrieren handelt, kann die durch die Vergütung erzeugte Schichtdicke beispielsweise zwischen 2 und 10 Mikrometer betragen und die erzielte Oberflächenhärte beispielsweise mehr als 800 HV.

Bei dem in den Figuren 9 und 10 gezeigten Beispiel weist die Elektromotoranordnung weiterhin eine Hülse 50 auf. Zur Gewichtsreduzierung können die Bauteile Kupplungszapfen 20 bzw. Kupplung, Hülse 50 und Motorgehäuse 2 aus Titan hergestellt werden. Zur Vermeidung von "Fressen" ist die Oberfläche des Kupplungszapfens 20 wie beschrieben vergütet. Zur Erzielung einer kratzfesten Oberfläche können auch die Hülse 50 und/oder das Motorgehäuse 2 aus Titan vergütet sein.

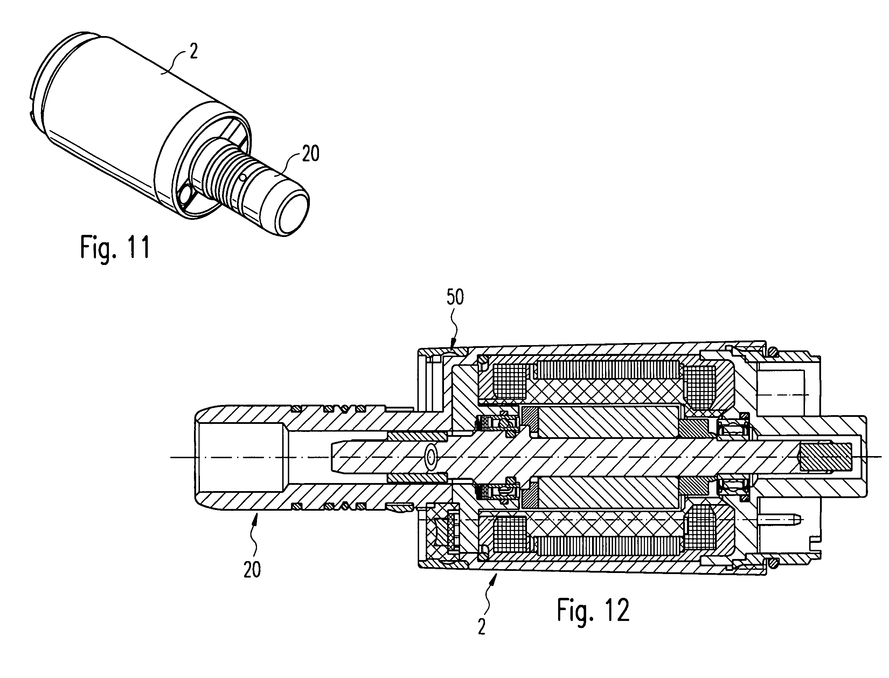

In den Figuren 11 und 12 ist ein weiteres Beispiel dargestellt, bei dem das Motorgehäuse 2 und der Kupplungszapfen 20 und wie beschrieben eine vergütete Titan-Oberfläche aufweisen. Dabei sind das Motorgehäuse 2 und der Kupplungszapfen 20 einstückig bzw. einteilig ausgebildet.

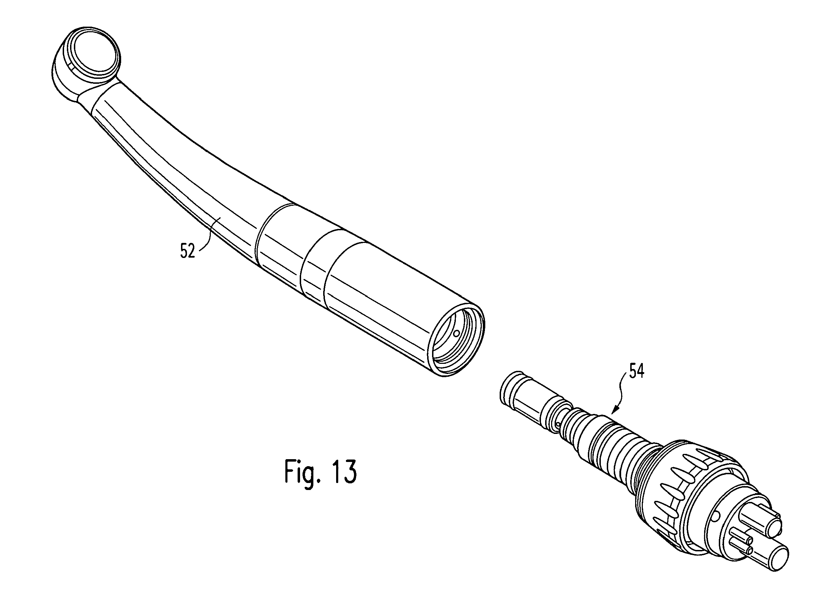

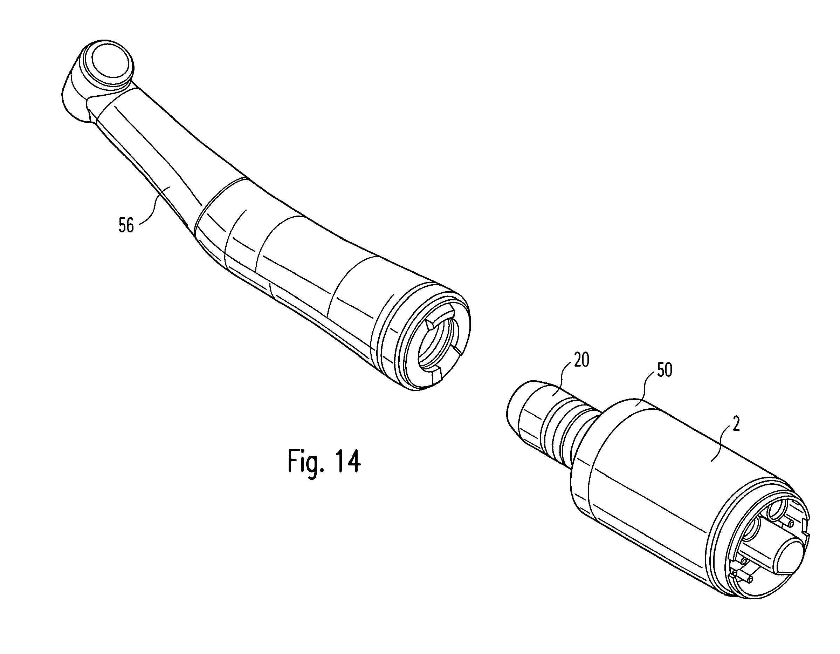

In Fig. 13 ist eine Turbine mit einer Multiflexkupplung skizziert, bei der das Turbinengehäuse 52 und der Kupplungszapfen 54 der Multiflexkupplung aus Titan vergütet sind. In Fig. 14 ist ein Hand- und Winkelstück 56 mit einer dazugehörigen Elektromotoranordnung skizziert; das Hand- und Winkelstück 56, der Kupplungszapfen 20, die Hülse 20 und das Motorgehäuse 2 können aus Titan vergütet sein.

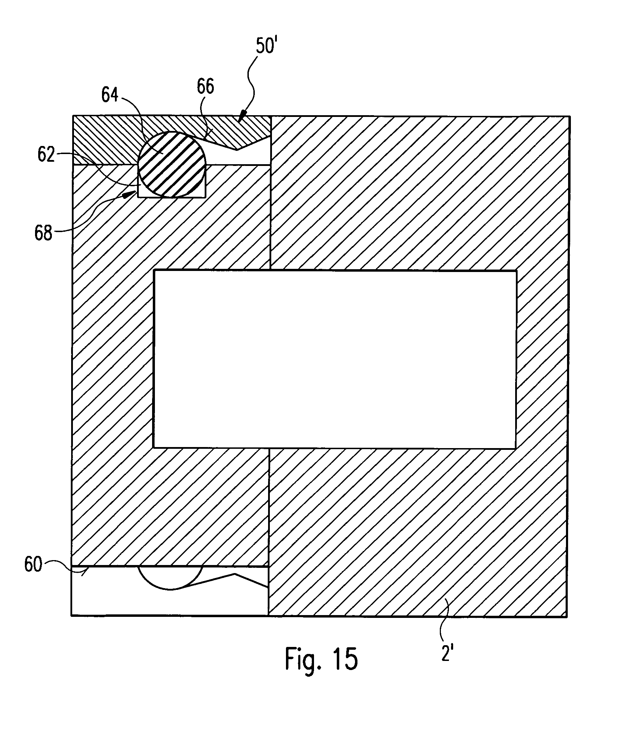

In Fig. 15 ist eine Skizze gezeigt, die das Prinzip eines erfindungsgemäßen Haltemechanismus für ein Dentalinstrument zeigt. Das Dentalinstrument weist ein Gehäuse 2' auf, bei dem es sich beispielsweise um das weiter oben dargestellte Motorgehäuse 2 einer erfindungsgemäßen Elektromotoranordnung handeln kann. Weiterhin weist das Dentalinstrument ein Instrumententeil 50' auf, das abnehmbar an dem Gehäuse 2' angeordnet ist. Bei dem Instrumententeil 50' kann es sich beispielsweise um die weiter oben dargestellte Hülse 50 handeln. Das Instrumententeil 50' weist einen ringförmigen Bereich auf, der eine äußere Umfangsfläche 60 des Gehäuses 2' umgreifend angeordnet ist; beispielsweise kann sich der ringförmige Bereich um die oben genannte Achse *L* herum erstrecken.

Auf der äußeren Umfangsfläche 60 ist eine Vertiefung 62, beispielsweise ein Sackloch oder eine Nut, angeordnet, in der wenigstens ein vorzugsweise kugelförmiges, elastisches Halteteil 64 aufgenommen ist. Bei dem elastischen Halteteil kann es sich beispielsweise um ein elastisches Gummiteil handeln, es können also beispielsweise als Halteteile 64 Gummikugeln, beispielswiese aus FKM, vorgesehen sein. In dem ringförmigen Bereich des Instrumententeils 50' ist eine Hinterschneidung 66 angeordnet, in die das wenigstens eine elastische Halteteil 64 eingreift. Vorteilhaft ist die Vertiefung 62 derart ausgebildet, dass das elastische Halteteil 64 das von der Vertiefung 62 definierte Volumen nur teilweise ausfüllt.

Es können vorteilhaft mehrere, beispielsweise drei entsprechend ausgebildete kugelförmige Halteteile 64 vorgesehen sein, die vorzugsweise gleichmäßig über den Umfang hinweg angeordnet sind, also beispielsweise bei drei Halteteilen 64 jeweils um 120° versetzt. Dabei kann für jedes der Halteteile 64 jeweils ein Sackloch vorgesehen sein. Im Fall einer Nut kann sich die Nut über den gesamten Umfang hinweg erstrecken. Es kann auch eine Kuhle bzw. es können auch mehrere Kuhlen entsprechend vorgesehen sein.

In dem Instrumententeil 50' sind vorzugsweise Schrägen angebracht, die in die vorzugsweise verrundete, Hinterschneidung 66 bzw. den Hinterschnitt übergehen. Beim Aufsetzen des Instrumententeils 50' bzw. der Hülse werden die Halteteile 64 durch die Schrägen deformiert und rasten anschließend in dem Hinterschnitt 66 ein. Insbesondere werden keine radial wirkenden Spiralfedern benötigt.

Beim Lösen werden die Halteteile 64 unter dem Abziehdruck wieder deformiert und das Instrumententeil 50' kann wieder abgezogen werden.

Vorzugsweise ist die Hinterschneidung 66 in ihrer Längsschnittform, wie aus Fig. 15 hervorgeht, an die Form des Halteteils 64 angepasst. Vorteilhaft ist die Ausgestaltung dabei derart, dass die kugelförmigen Halteteile 64 unbelastet sind, wenn das Instrumententeil 50' wie vorgesehen mit dem Gehäuse 2' verbunden ist. In diesem unbelasteten Zustand hat jede der Halteteile 64 sein größtes Volumen. Dieses Volumen steht auch beim Abziehen und Aufsetzen des Instrumententeils 50' für eine Deformation der Halteteile 64 zur Verfügung. Vorzugsweise sitzen die Halteteile 64 in Vertiefungen 62 in Form von Sacklöchern und dichten Letztere an der Mantellinie gegen eindringende Flüssigkeiten und Verschmutzungen ab. Mit Bezug auf Fig. 15 "unterhalb", allgemein also radial innerhalb dieser Mantelline bzw. -fläche ist jedes der Sacklöcher 62 so gestaltet, dass das betreffende Halteteil 64 auf einer ebenen Anlage bzw. Stützfläche aufliegen kann, wobei ein Freiraum zwischen der Mantellinie und der Anlage bzw. Stützfläche gebildet ist, der für eine Deformation des Halteteils 64 beim Abziehen und Aufsetzen des Instrumententeils 50' zur Verfügung steht, also sozusagen ein "Deformationsraum" 68.

Im Vergleich zu einer Schnappverbindung mit einem O-Ring lässt sich der Haltemechanismus so gestalten, dass die für das Abziehen und Aufsetzen erforderlichen Fügekräfte niedriger sind. Die Toleranzanforderungen sind geringer. Es können auch größere Hinterschnitte realisiert werden, was zur Funktionssicherheit beiträgt.

Wird das Instrumententeil 50' beim Aufsetzen bzw. Abziehen gedreht, reduzieren sich die erforderlichen Kräfte weiterhin, da sich dabei die kugelförmigen Halteteile 64 zur Schräge auf einer Linie geringerer Steigung bewegen bzw. kontaktieren.

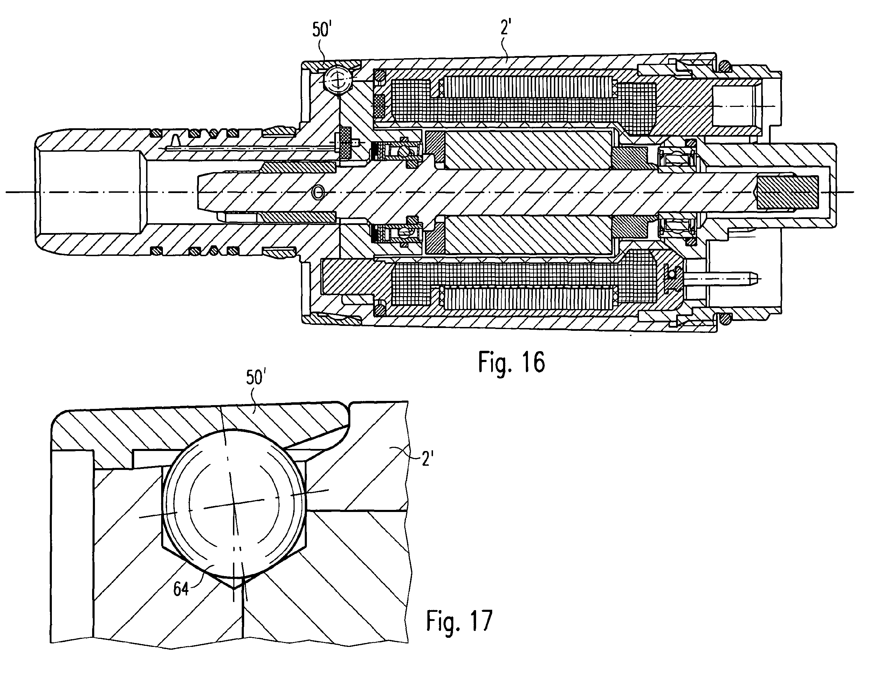

In Fig. 16 ist ein Längsschnitt durch eine entsprechende Elektromotoranordnung mit einer Hülse 50' gezeigt, die über einen erfindungsgemäßen Haltemechanismus bzw. eine erfindungsgemäße Schnappverbindung am Gehäuse 2' angeordnet und gehaltert ist. In Fig. 17 ist vergrößert dargestellt, wie die Kugel 64 in einer Nut der Hülse 50' rastet.

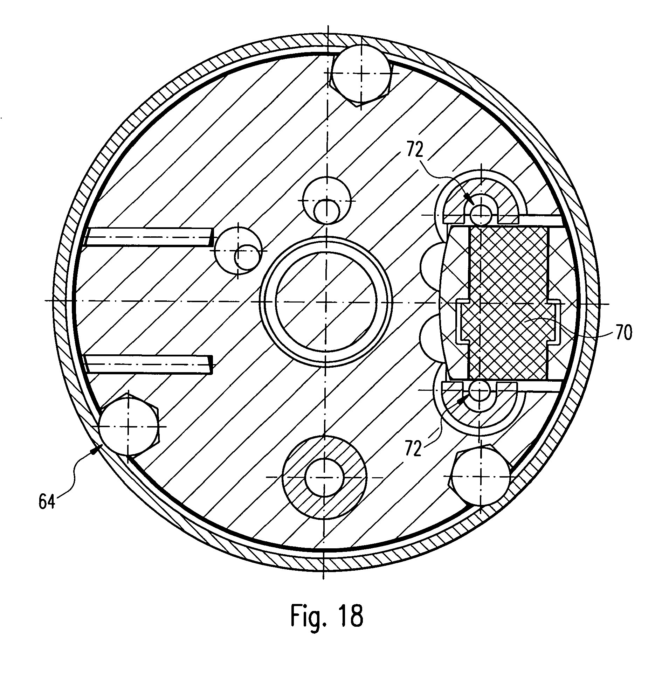

In Fig. 18 ist ein Querschnitt gezeigt, in dem man erkennt, wie drei Halteteile 64 in Form von Gummikugeln gleichmäßig über den Umfang verteilt, also jeweils im 120°-Abstand, angeordnet sind. Mit dem Bezugszeichen 70 ist eine LED-Platine bezeichnet, mit dem Bezugszeichen 72 eine Kontaktierung einer LED-Baugruppe.

## Patentansprüche

1. Elektromotoranordnung für ein medizinisches, insbesondere ein dentales Handstück, aufweisend
- ein Motorgehäuse (2),
- einen Rotor (4), der über ein erstes Lager (6) und ein zweites Lager (8) um eine Achse (*L*) drehbar in dem Motorgehäuse (2) angeordnet ist,
- einen Stator (14), der mit Bezug auf die Achse (*L*) um den Rotor (4) herum angeordnet ist,
- einen ersten Lagerflansch (10), in dem das erste Lager (6) aufgenommen ist und
- einen zweiten Lagerflansch (12), in dem das zweite Lager (8) aufgenommen ist,
**dadurch gekennzeichnet,**
**dass** der erste Lagerflansch (10) aus Metall besteht und eine erste Mantelfläche (101) aufweist, die unmittelbar an das Motorgehäuse (2) angrenzend angeordnet ist und
**dass** der zweite Lagerflansch (12) aus Metall besteht und eine zweite Mantelfläche (121) aufweist, die unmittelbar an das Motorgehäuse (2) angrenzend angeordnet ist.

2. Elektromotoranordnung nach Anspruch 1,
bei der der Stator (14) zwischen dem ersten Lagerflansch (10) und dem zweiten Lagerflansch (12) eingespannt angeordnet ist und vorzugsweise durch den ersten Lagerflansch (10) und den zweiten Lagerflansch (12) mit Bezug auf die Achse (*L*) radial in dem Motorgehäuse (2) zentriert ist.

3. Elektromotoranordnung nach einem der vorhergehenden Ansprüche,
weiterhin aufweisend
- ein Kupplungselement, insbesondere in Form eines Kupplungszapfens, zur Verbindung der Elektromotoranordnung mit dem medizinischen Handstück, wobei das Kupplungselement vorzugsweise einstückig mit dem Motorgehäuse ausgebildet ist.

4. Elektromotoranordnung für ein medizinisches, insbesondere ein dentales Handstück, aufweisend
- ein Motorgehäuse (2),
- einen Rotor (4), der über ein Lager (6) um eine Achse (*L*) drehbar in dem Motorgehäuse (2) angeordnet ist, wobei das Lager (6) in einem Lagerflansch (10) gefasst angeordnet ist,
- einen Stator (14), der mit Bezug auf die Achse (*L*) um den Rotor (4) herum angeordnet ist,
- einen Kupplungszapfen (20), der um die Achse (*L*) herum angeordnet ist,
- einen ersten Medienleitungsabschnitt (30) zur Leitung eines Mediums, wobei sich der erste Medienleitungsabschnitt (30) mit Bezug auf die Achse (*L*) radial außerhalb des Rotors (4) erstreckt,
- einen zweiten Medienleitungsabschnitt (32) zur weiteren Leitung des Mediums, der sich in dem Kupplungszapfen (20) erstreckt,
wobei der zweite Medienleitungsabschnitt (32) radial näher an der Achse (*L*) angeordnet ist, als der erste Medienleitungsabschnitt (30) und
- eine Medienumleitung (34) für eine das Medium leitende Verbindung zwischen dem ersten Medienleitungsabschnitt (30) und dem zweiten Medienleitungsabschnitt (32),
**dadurch gekennzeichnet,**
**dass** die Medienumleitung (34) in dem Lagerflansch (10) ausgebildet ist.

5. Elektromotoranordnung nach Anspruch 4,
weiterhin aufweisend
- einen Dichtsitz (36, 36') zu einer Abdichtung zwischen dem ersten Medienleitungsabschnitt (30) und der Medienumleitung (34) oder zwischen der Medienumleitung (34) und dem zweiten Medienleitungsabschnitt (32), wobei der der Dichtsitz (36, 36') in dem Lagerflansch (10) und/oder in dem Stator (14) und/oder in dem Kupplungszapfen (20) ausgebildet ist und wobei vorzugsweise in dem Dichtsitz ein O-Ring (38) angeordnet ist.

6. Elektromotoranordnung nach Anspruch 4 oder 5,
wobei der erste Medienleitungsabschnitt (30) in den Stator (14) integriert ist.

7. Elektromotoranordnung nach einem der Ansprüche 4 bis 6,
die zu einer Abdichtung zwischen dem ersten Medienleitungsabschnitt (30) und der Medienumleitung (34) oder zwischen der Medienumleitung (34) und dem zweiten Medienleitungsabschnitt (32) eine Flachdichtung aufweist, die an dem Lagerflansch (10) anliegt.

8. Elektromotoranordnung nach einem der Ansprüche 4 bis 7,
bei der der Lagerflansch (10) eine radiale Bohrung (40) aufweist, durch die ein Teil der Medienumleitung (34) gebildet ist.

9. Elektromotoranordnung nach Anspruch 8,
bei der in der Bohrung (40) ein Schlauchelement (43) aus elastischem Werkstoff angeordnet ist.

10. Elektromotoranordnung nach Anspruch 9,
weiterhin aufweisend
ein Zapfenelement (44), das derart angeordnet ist, dass es in das Schlauchelement (43) hineinragt und Letzteres radial nach außen gegenüber dem Medium abdichtet.

11. Elektromotoranordnung nach einem der Ansprüche 4 bis 8,
bei der in der Medienumleitung (34) ein Lippenventil angeordnet ist.

12. Elektromotoranordnung nach einem der Ansprüche 4 bis 11,
bei der der Lagerflansch (10) integraler Bestandteil des Motorgehäuses (2) ist.

13. Medizininstrumententeil, insbesondere Dentalinstrumententeil, aufweisend
- eine äußere Oberfläche, die aus Titan besteht,
**dadurch gekennzeichnet,**
**dass** die Oberfläche durch einen Härteprozess vergütet ist.

14. Medizininstrumententeil, insbesondere Dentalinstrumententeil nach Anspruch 13,
bei dem die Oberfläche basierend auf einem thermochemischen Diffusionsverfahren vergütet ist, wobei es sich vorzugsweise bei dem thermochemischen Diffusionsverfahren um das so genannte "Oxygen Diffusion Hardening" handelt.

15. Dentalinstrumententeil nach Anspruch 13 oder 14,
wobei das Dentalinstrumententeil einen Kupplungszapfen (20) aufweist, der zur Verbindung mit einem weiteren Dentalinstrumententeil vorgesehen ist, beispielsweise mit einem Hand- und Winkelstück
und wobei es sich bei der äußeren Oberfläche um eine äußere Oberfläche des Kupplungszapfens (20) handelt.

16. Dentalinstrument, aufweisend
- eine Gehäuse (2') und
- ein Instrumententeil (50'), das abnehmbar an dem Gehäuse (2') angeordnet ist, wobei das Instrumententeil (50') einen ringförmigen Bereich aufweist, der eine äußere Umfangsfläche (60) des Gehäuses (2') umgreifend angeordnet ist,
**dadurch gekennzeichnet,**
**dass** auf der äußeren Umfangsfläche (60) eine Vertiefung (62) angeordnet ist, in der wenigstens ein vorzugsweise kugelförmiges, elastisches Halteteil (64) aufgenommen ist und
**dass** in dem ringförmigen Bereich eine Hinterschneidung (66) angeordnet ist, in die das elastische Halteteil (64) eingreift.

17. Dentalinstrument nach Anspruch 16,
bei dem die Vertiefung (62) derart ausgebildet ist, dass das elastische Halteteil (64) das von der Vertiefung (62) definierte Volumen nur teilweise ausfüllt.
